# EUROPÄISCHE PATENTANMELDUNG

(11) **EP 4 625 922 A1**
(43) Veröffentlichungstag der Anmeldung: **01.10.2025**
(21) Anmeldenummer: 24166442.4
(22) Anmeldetag: 26.03.2024
(51) Int. Cl.: H04L 41/0806, H04L 41/0853, H04L 41/08, H04L 41/0893, H04L 41/12, H04L 41/14, H04L 41/22

(54) **VERFAHREN UND VORRICHTUNG ZUR COMPUTERIMPLEMENTIERTEN KONFIGURATION VON GERÄTEN IN EINEM KOMMUNIKATIONSNETZWERK**

(71) Anmelder: Siemens Aktiengesellschaft, 80333 München (DE)
(72) Erfinder: Gsänger, Volker, 91126 Kammerstein (DE); Keidel, Torsten, 91056 Erlangen (DE); Rehm, Andreas, 90475 Nürnberg (DE); Schwering, Wolfgang, 91341 Röttenbach (DE); Stolze, Karina, 30167 Hannover (DE)
(74) Vertreter: Siemens Patent Attorneys

(57) **Zusammenfassung**

Die Erfindung beschreibt ein Verfahren zur computerimplementierten Konfiguration von Geräten in einem Kommunikationsnetzwerk (30), das eine Mehrzahl an Geräten (31-41) umfasst, die in vorgegebener Weise miteinander vernetzt sind, wobei jedes Gerät (31-41) mit individuellen Konfigurationsparametern zu konfigurieren ist. Das erfindungsgemäße Verfahren umfasst in Schritt a) das Bestimmen von Geräteeigenschaften sowie von Kommunikationsverbindungen (42) zu anderen Geräten (31-41) des Kommunikationsnetzwerks (30) für ein jeweiliges Gerät (31-41) In Schritt b) erfolgt das Verarbeiten der Geräteeigenschaften und der Kommunikationsverbindungen (42), um eine Zugehörigkeit zu einer oder mehreren Konfigurationsdomänen (50, 51), die eine logische Gruppierung von Geräten (31-41), die ein vorgegebenes Kommunikationsprotokoll verwenden, repräsentieren, zu bestimmen und jedes Gerät (31-41) des Kommunikationsnetzwerks (30) zumindest einer Konfigurationsdomäne (50, 51) zuzuordnen. In Schritt c) erfolgt die Instanziierung sämtlicher Konfigurationsdomänen (50, 51) durch Zuweisung der Geräte (31-41) zu einer jeweiligen Konfigurationsdomäne (50,51). Schließlich erfolgt in Schritt d) die automatisierte Konfiguration der einer jeweiligen Konfigurationsdomäne (50, 51) zugewiesenen Geräte (31-41) gemäß einem für die Konfigurationsdomäne vorbestimmten Protokoll.

## Beschreibung

Die Erfindung betrifft ein Verfahren und eine Vorrichtung zur computerimplementierten Konfiguration von Geräten in einem Kommunikationsnetzwerk, das eine Mehrzahl an Geräten umfasst, die in vorgegebener Weise miteinander vernetzt sind, wobei jedes Gerät mit individuellen Konfigurationsparametern zu konfigurieren ist.

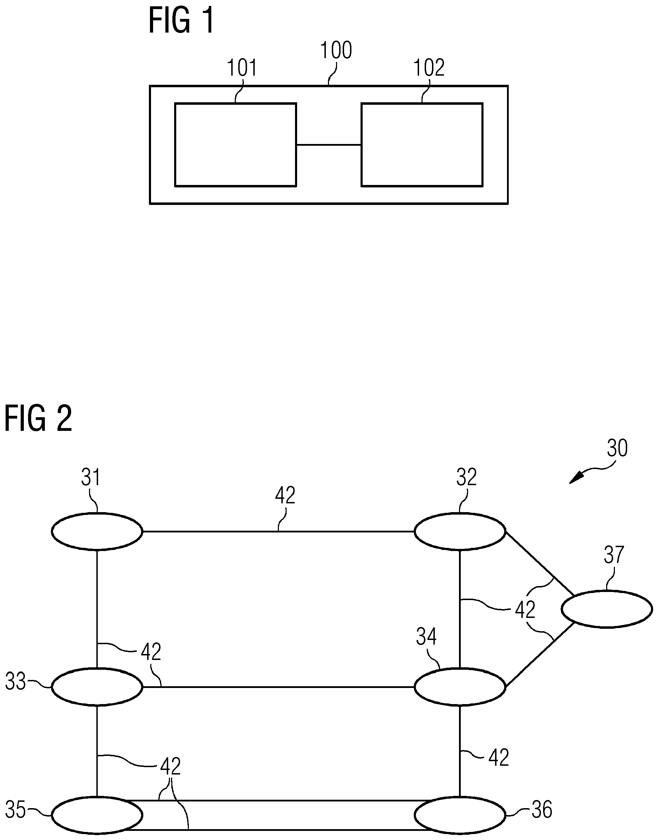

Moderne Kommunikationsnetzwerke können eine große Anzahl an Geräten, die allgemein Netzwerkkomponenten darstellen, umfassen, die abhängig von örtlichen und/oder technischen Gegebenheiten über leitungsgebundene oder drahtlose Kommunikationsverbindungen miteinander vernetzt sind. Fig. 2 zeigt ein exemplarisches und einfaches Kommunikationsnetzwerk 30, das vorliegend sieben Geräte 31 bis 37 umfasst. Die Endgeräte 31 bis 37 sind in einer vorgegebenen Weise über Kommunikationsverbindungen 42 miteinander zum Austausch von Daten verbunden. Wie der Fig. 2 zu entnehmen ist, sind beispielhaft die Geräte 31 bis 34, die Geräte 32, 34 und 37 sowie die Geräte 33, 34, 35 und 36 zu einem jeweiligen Ring zusammengeschlossen. Die Geräte 35, 36 können darüber hinaus über redundante Kommunikationsverbindungen 42 miteinander kommunizieren. Abhängig von den technischen Eigenschaften der Geräte 31 bis 37, welche entweder ausschließlich zur Kommunikation ausgebildete Netzwerkkomponenten (z.B. Router oder Switches) oder Recheneinheiten, Steuereinheiten, Sensoren, Aktoren usw. sein können, erfolgt eine Konfiguration mitbestimmten Netzwerkprotokollen (kurz: Protokollen) und entsprechenden Konfigurationsparametern (d.h. Eigenschaften).

In der Praxis wird viel technisches Know-how benötigt, welches Protokoll für die Netzwerkkomponenten geeignet oder erforderlich ist, um Anforderungen der auf den Geräten 31 bis 37 ablaufenden Applikationen zu erfüllen. Insbesondere erfordert es Kenntnis darüber, welche der Geräte in einer Interaktion miteinander bestehen, und worin die Interaktion besteht. Die Entscheidung, welche Protokolle in dem Kommunikationsnetzwerk eingesetzt werden oder werden sollen sowie mit welchen Konfigurationsparametern die einzelnen Geräte 31 bis 37 zu konfigurieren sind, wurde in der Vergangenheit manuell gefällt. Hierbei besteht die Schwierigkeit, das nicht immer die optimale Wahl getroffen werden kann. Zudem ist es aufwendig, die ausgewählten Kommunikationsparameter explizit auf der Vielzahl an Geräten 31 bis 37 entsprechend zu konfigurieren.

Es ist bekannt, sogenannte Policies zu verwenden, um eine Vielzahl von Geräten mit Konfigurationsparametern zu konfigurieren. Viele Einstellungen sind dabei jedoch von einem die Konfiguration vornehmenden Nutzer zu treffen.

Es ist Aufgabe der Erfindung, ein Verfahren und eine Vorrichtung anzugeben, mit denen eine automatisierte Konfiguration der Geräte eines Kommunikationsnetzwerks mit entsprechenden Konfigurationsparametern ermöglicht wird.

Diese Aufgabe wird gelöst durch ein Verfahren gemäß den Merkmalen des Anspruches 1, ein Computerprogrammprodukt gemäß den Merkmalen des Anspruches 10 sowie eine Vorrichtung gemäß den Merkmalen des Anspruches 11. Vorteilhafte Ausgestaltungen ergeben sich aus den abhängigen Ansprüchen.

Gemäß einem ersten Aspekt der Erfindung wird ein Verfahren zur computerimplementierten Konfiguration von Geräten in einem Kommunikationsnetzwerk vorgeschlagen, das eine Mehrzahl an Geräten umfasst, die in vorgegebener Weise miteinander vernetzt sind, wobei jedes Gerät mit individuellen Konfigurationsparametern, die auch als Einstellungen bezeichnet werden, zu konfigurieren ist. Die Anzahl an Geräten in einem solchen Kommunikationsnetzwerk kann beliebig sein. Die Vernetzung der Geräte untereinander folgt nach praktischen Gegebenheiten und kann ebenfalls beliebig sein. Bei den Geräten handelt es sich allgemein um Netzwerkkomponenten, die entweder ausschließlich zur Kommunikation oder Weiterleitung von Datenpaketen ausgebildet sind (z.B. Router oder Switches) oder um solche Geräte, die Netzwerkkomponenten für die Kommunikation mit anderen Geräten umfassen, wie z.B. Recheneinheiten, Steuereinheiten, Sensoren, Aktoren, usw.

Das Verfahren umfasst die folgenden Schritte:
In einem Schritt a) erfolgt ein Bestimmen von Geräteeigenschaften sowie von Kommunikationsverbindungen zu anderen Geräten des Kommunikationsnetzwerks für ein jeweiliges Gerät. Unter den Geräteeigenschaften werden insbesondere eine oder mehrere der folgenden Informationen verstanden: verfügbare Porttypen; Portanzahl; Geschwindigkeit einer möglichen Datenübertragung über entsprechende Kommunikationsverbindungen; eine Information darüber, welche Einstellungen auf dem entsprechenden Gerät gespeichert sind;
eine Information darüber, welche Einstellungen auf dem betreffenden Gerät konfigurierbar sind.

Kommunikationsverbindungen können leitungsgebundene oder drahtlose Kommunikationsverbindungen sein.

In einem Schritt b) erfolgt ein Verarbeiten der Geräteeigenschaften und der Kommunikationsverbindungen, um eine Zugehörigkeit zu einer oder mehreren Konfigurationsdomänen, die eine logische Gruppierung von Geräten, die ein vorgegebenes Kommunikationsprotokoll verwenden, repräsentieren, zu bestimmen und jedes Gerät des Kommunikationsnetzwerks zumindest einer Konfigurationsdomäne zuzuordnen. Konfigurationsdomänen werden insbesondere für spezifische Technologien und Protokolle erzeugt, wie z.B. DNS, NTP, usw.

In einem Schritt c) erfolgt eine Instanziierung sämtlicher Konfigurationsdomänen durch Zuweisung der Geräte zu einer jeweiligen Konfigurationsdomäne. Im Rahmen der Instanziierung werden alle Geräte, die zu einer jeweiligen Konfigurationsdomäne zugehörig sind, zusammengefasst. Mit anderen Worten werden die Geräte durch topologische Verbindungen miteinander vernetzt.

In einem Schritt d) erfolgt dann eine automatisierte Konfiguration der einer jeweiligen Konfigurationsdomäne zugewiesenen Geräte gemäß einem für die Konfigurationsdomäne vorbestimmten Protokoll.

Durch das vorgeschlagene Verfahren, Geräte logisch in sog. Konfigurationsdomänen miteinander zu gruppieren, wird eine Instanziierung der Geräte und schließlich eine Konfiguration durch Bestimmung von entsprechenden Konfigurationsparametern auf einfache Weise ermöglicht. Die Erfassung der Geräte über ihren topologischen Zusammenhang als Verbund reduziert den Aufwand für Berechnungen, da für die weitere Konfiguration lediglich die in einer Konfigurationsdomäne zusammengefassten Geräte berücksichtigt werden müssen. Hierdurch wird es möglich, komplexe Kommunikationsnetzwerke automatisiert für verschiedene Netzwerkprotokolle zu konfigurieren.

Gemäß einer zweckmäßigen Ausgestaltung wird Schritt d) iterativ für jede in dem Kommunikationsnetzwerk bestimmte Konfigurationsdomäne wiederholt. Durch die Zuweisung der Geräte des Kommunikationsnetzwerks zu zumindest einer Konfigurationsdomäne kann die weitere Analyse von Netzwerkeigenschaften und zu bestimmenden Konfigurationsparametern auf kleinere Bereiche des Kommunikationsnetzwerks, nämlich die Konfigurationsdomänen, reduziert werden. Dies reduziert die Komplexität und ermöglicht die automatisierte Bestimmung von Konfigurationsparametern.

Gemäß einer weiteren zweckmäßigen Ausgestaltung wird das Bestimmen von Geräteeigenschaften sowie von Kommunikationsverbindungen zu anderen Geräten des Kommunikationsnetzwerks iterativ für jedes der Geräte in dem Kommunikationsnetzwerk durchgeführt. Dabei ist es unerheblich, in welcher Reihenfolge die Bestimmung der Geräteeigenschaften des Kommunikationsnetzwerks erfolgt.

Eine weitere zweckmäßige Ausgestaltung sieht vor, dass gerätespezifische Konfigurationstags durch Analyse der Geräteeigenschaften eines jeweiligen Geräts bestimmt werden. Insbesondere umfassen die Konfigurationstags eine Information darüber, welche Rolle ein Gerät in der Konfigurationsdomäne einnehmen soll oder wird. Zweckmäßigerweise wird die Analyse der Geräteeigenschaften für jedes Gerät in dem Kommunikationsnetzwerk durchgeführt.

Eine weitere zweckmäßige Ausgestaltung sieht vor, dass zumindest einer Teilauswahl an Geräten in einer jeweiligen Konfigurationsdomäne ein Konfigurationstag zugewiesen wird. Die Konfigurationstags ermöglichen in Verbindung mit der Bestimmung der Konfigurationsdomäne die Ermittlung von bestmöglichen Konfigurationsparametern und die automatisierte Konfiguration der Geräte mit diesen Konfigurationsparametern. Die Rolle in der Konfigurationsdomäne legt beispielsweise fest, welche Kommunikationen von welchen Kommunikationsverbindungen blockiert oder zugelassen werden sollen. Die Rolle bzw. grundsätzlich mögliche Rollen sind abhängig von dem zu verwendenden Netzwerkprotokoll.

Im Rahmen der vorliegenden Erfindung können bekannte, beliebige Protokolle (Netzwerkprotokolle) zur Anwendung kommen, wobei insbesondere RSTP, PTP, NTP, MRP, HSR, PRP in Betracht kommen.

Gemäß einem zweiten Aspekt wird ein Computerprogrammprodukt vorgeschlagen, das Befehle umfasst, die bei der Ausführung des Programms durch einen Computer diesen veranlassen, das Verfahren gemäß einer oder mehrerer Ausgestaltungen der Erfindung auszuführen.

Gemäß einem dritten Aspekt der vorliegenden Erfindung wird eine Vorrichtung zur computerimplementierten Konfiguration von Geräten in einem Kommunikationsnetzwerk, das eine Mehrzahl an Geräten umfasst, die in vorgegebener Weise miteinander vernetzt sind, vorgeschlagen, wobei jedes Gerät mit individuellen Konfigurationsparametern zu konfigurieren ist. Die Vorrichtung umfasst eine Recheneinheit, die dazu eingerichtet ist, das Verfahren gemäß einer oder mehrerer Ausgestaltungsformen der Erfindung durchzuführen.

Die Erfindung wird nachfolgend näher anhand der Beschreibung eines Ausführungsbeispiels näher erläutert. Es zeigen:
- Fig. 1: eine erfindungsgemäße Vorrichtung zur computerimplementierten Konfiguration von Geräten in einem Kommunikationsnetzwerk, die zur Durchführung des erfindungsgemäßen Verfahrens eingerichtet ist;
- Fig. 2: eine schematische Darstellung eines exemplarischen Kommunikationsnetzwerks mit einer Mehrzahl an Geräten, wobei bei diesem Kommunikationsnetzwerk die Beziehung der Geräte untereinander und deren Konfigurationsparameter nicht bekannt sind;
- Fig. 3: eine schematische Darstellung des Kommunikationsnetzwerks aus Fig. 2, wobei eine Teilanzahl an Geräten einer Konfigurationsdomäne angehört;
- Fig. 4: eine schematische Darstellung eines mit dem erfindungsgemäßen Verfahren konfigurierten Kommunikationsnetzwerks, welches auf dem Netzwerkprotokoll MRP (Media Redundancy Protocol) basiert;
- Fig. 5: eine schematische Darstellung eines mit dem erfindungsgemäßen Verfahren konfigurierten Kommunikationsnetzwerks, welches auf dem Netzwerkprotokoll PTP (Precision Time Protocol) basiert;
- Fig. 6: eine weitere schematische Darstellung eines mit dem erfindungsgemäßen Verfahren konfigurierten Kommunikationsnetzwerks, welches auf dem Netzwerkprotokoll PTP (Precision Time Protocol) basiert;
- Fig. 7: eine schematische Darstellung eines mit dem erfindungsgemäßen Verfahren konfigurierten Kommunikationsnetzwerks, welches auf RNA (Redundant Network Architecture) basiert;
- Fig. 8: eine schematische Darstellung eines mit dem erfindungsgemäßen Verfahren konfigurierten Kommunikationsnetzwerks, welches auf dem Netzwerkprotokoll RSTP (Rapid Spanning Tree Protocol) basiert; und
- Fig. 9: einen schematischen Ablaufplan, der die Schritte des erfindungsgemäßen Verfahrens visualisiert.

Fig. 1 zeigt eine erfindungsgemäße Vorrichtung 100 zur rechnergestützten Konfiguration von Geräten 31 bis 41 eines, wie exemplarisch in Fig. 2 gezeigten, Kommunikationsnetzwerks 30. Die Vorrichtung 100 umfasst als Rechner einen Prozessor 101 sowie eine Nutzerschnittstelle 102 zur Steuerung und/oder Überwachung eines im Wesentlichen automatisiert ablaufenden Konfigurationsprozesses. Die Nutzerschnittstelle 102 umfasst ein im Detail nicht dargestelltes Display sowie ein ebenfalls im Detail nicht dargestelltes Eingabemittel. Beispielsweise kann die Nutzerschnittstelle 102 als Touch-Screen ausgebildet sein. Ebenso können das Display und das Eingabemittel, z.B. eine Tastatur, ein Zeigergerät, ein Mikrofon, usw. getrennt ausgebildet sein.

Mithilfe der in Fig. 1 gezeigten Vorrichtung 100 soll für ein beispielhaft wie in Fig. 2 gezeigtes und zuvor beschriebenen es Kommunikationsnetzwerk 30, das eine Mehrzahl an Geräten (hier: 31 bis 37) umfasst, die in vorgegebener, aber zunächst nicht bekannten, Weise über Kommunikationsverbindungen 42 miteinander vernetzt sind, eine Konfiguration sämtlicher Geräte 31 bis 37 erfolgen. Dies soll einen Nutzer, der das Kommunikationsnetzwerk 30 konfigurieren möchte, bei der Konfiguration unterstützen, zu der an sich ein großes Vorwissen erforderlich ist.

Allgemein kann die computerimplementierte, automatisierte Konfiguration der Geräte unabhängig von der Anzahl der Geräte und/oder unabhängig von der Anzahl der zwischen den Geräten ausgebildeten Kommunikationsverbindungen erfolgen, wie anhand der weiteren Ausführungsbeispiele verdeutlicht werden wird.

Das Verfahren zur computerimplementierten Konfiguration der Geräte in einem beliebigen Kommunikationsnetzwerk 30, bei dem die Mehrzahl an Geräten in vorgegebener Weise über drahtlose oder drahtgebundene Kommunikationsverbindungen miteinander vernetzt sind, basiert auf der Erzeugung von Kommunikationsdomains, die für unterschiedliche Technologien bzw. Protokolle, wie z.B. DNS, NTP, usw., erzeugt werden.

Eine Konfigurationsdomäne ist eine logische Gruppierung von Geräten, welche zusammen ein Netzwerkprotokoll (Protokoll) oder eine Technologie nutzen. Allgemein werden jedem Gerät, welches später einer Konfigurationsdomäne angehören soll, die Mitgliedschaft in wenigstens einer Konfigurationsdomäne zugewiesen. Ein Gerät kann somit gleichzeitig einer oder mehreren unterschiedlichen Konfigurationsdomänen zugehörig sein.

Die Konfiguration der Geräte mit individuellen Konfigurationsparametern wird weiterhin dadurch unterstützt, dass zumindest manchen der Geräte sogenannte Konfigurationstags zugeordnet werden, welche angeben, welche Rolle das betreffende Gerät innerhalb der Konfigurationsdomäne einnehmen soll. Die Zugehörigkeit zu einer oder mehreren Konfigurationsdomänen und die optionale, aber zweckmäßige, Zuweisung der Konfigurationstags wird bevorzugt automatisiert durch die Recheneinheit 101 durchgeführt, die zu diesem Zweck kommunikativ mit den Geräten des Kommunikationsnetzwerk 30 verbunden ist. Die Recheneinheit 101 kann auch die Recheneinheit eines der Geräte des zu konfigurierenden Kommunikationsnetzwerks sein.

Die Bestimmung der Zugehörigkeit einer oder mehrerer der Geräte des Kommunikationsnetzwerks 30 kann alternativ auch mit Hilfe von vorab erzeugten Templates durchgeführt werden. Die Templates können z.B. dann verwendet werden, wenn die Struktur des Kommunikationsnetzwerks 30, zumindest teilweise, bekannt ist.

Durch die gewonnenen Informationen können die Geräte durch topologische Verbindungen miteinander vernetzt werden. Durch diese Verbindungen können dann die Instanzen der Konfigurationsdomänen ermittelt werden. Geräte mit der gleichen Zugehörigkeit in der gleichen Konfigurationsdomäne werden dabei zusammengefasst. Die Herstellung der topologischen Verbindungen zur Vernetzung wird insbesondere durch einen Benutzer vorgenommen.

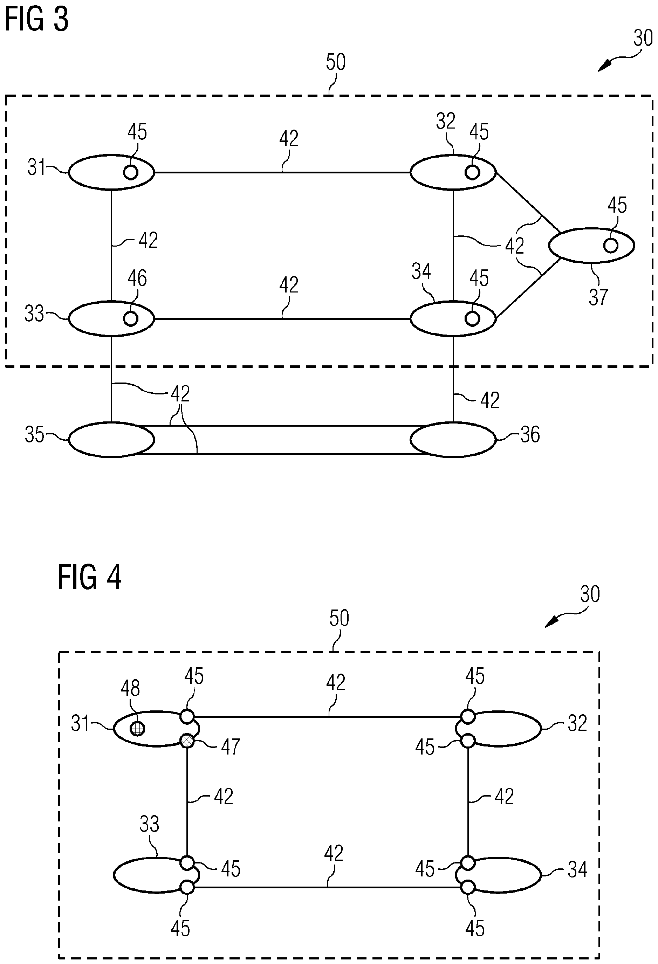

Dies wird nachfolgend exemplarisch mit Hilfe von Fig. 3 erläutert, welche das in Fig. 2 gezeigte Kommunikationsnetzwerk 3 wiedergibt, wobei die Geräte 31, 32, 33, 34 sowie 37 einer Konfigurationsdomäne 50 zugewiesen wurden. Die Geräte 35 und 36 wurden demgegenüber keiner Konfigurationsdomäne zugewiesen. Den der Konfigurationsdomäne 50 zugeordneten Geräten 31, 32, 33, 34 und 37 sind ferner jeweilige Konfigurationstags zugeordnet worden. Den Geräten 31, 32, 34 und 37 ist dabei ein identisches Konfigurationstag 45 zugewiesen. Das Gerät 33 ist mit einem anderen Konfigurationstag 46 versehen, was durch die gekreuzte Schrägschraffur hervorgehoben ist. Es ist anzumerken, dass pro Gerät auch mehrere Konfigurationstags vergeben werden könnten.

Die Geräte 31, 32, 33, 34 und 37 der Konfigurationsdomäne 50 werden in einem an sich bekannten Topologiegraphen abgelegt. Damit kann nun die Konfiguration eines bestimmten Netzwerkprotokolls nur für diese Geräte betrachtet werden. Ein Beispiel hierfür ist das Netzwerkprotokoll MRP (Media Redundancy Protokoll). Dies wird nachfolgend unter Bezugnahme auf Fig. 4 beschrieben.

Wie Fig. 4 zeigt, wird für die Geräte 31 bis 34 ein Konfigurationsdomäne 50 erzeugt, welche alle Informationen enthält, um MRP zu parametrieren. Die Konfigurationsdomäne 50 gibt an, dass die Geräte 31 bis 34 in einem Ring miteinander verbunden sein sollen. Dies bedeutet, jeweils zwei Geräte 31 und 32, 32 und 34, 34 und 33 sowie 33 und 31 sind jeweils über genau eine Kommunikationsverbindung 42 miteinander verbunden. Für die Enden der jeweiligen Kommunikationsverbindungen 42 werden Konfigurationstags 45, 47 festgelegt, welche angeben, welche Geräte und welche Kommunikationsverbindungen 42 blockiert werden sollen. Damit kann eine Konfiguration für MRP abgeleitet werden.

Bei der automatisierten Konfiguration steht hierbei im Fokus, einen korrekten Redundanz-Mechanismus zu konfigurieren und einen korrekten Master (auch als Manager bekannt). Bei MRP existiert die Funktion "Auto-Manager". Sind mehrere der Geräte 31 bis 34 in diesem Modus, kann der Aufbau des Kommunikationsringes länger dauern. Durch die Konfiguration eines betreffenden Gerätes als Client wird die entsprechende Performance und Stabilität des Ringes gesteigert. In dem in Fig. 4 gezeigten Ausführungsbeispiel stellt z.B. das Gerät 31 den MRP-Manager dar, was durch das Konfigurationstag 48 visualisiert und festgelegt ist. Mit dem Konfigurationstag 47 wird ein durch das Gerät 31 geblockter Port, mit dem die Kommunikationsverbindung 42 zu dem Gerät 33 verbunden ist, blockiert. Demgegenüber sind sämtliche Kommunikationsverbindungen, deren Ports mit dem Konfigurationstag 45 gekennzeichnet sind, für eine Datenverbindung geöffnet.

Es ist grundsätzlich nicht notwendig, dass jedes Gerät mit einem Konfigurationstag versehen ist. Ebenso ist es nicht erforderlich, sämtliche Arten von Konfigurationstags für jedes beliebige Gerät zu nutzen. Wird beispielsweise kein Konfigurationstag für das Endgerät verwendet, das den Manager der zu einer Ringtopologie zusammengeschlossenen Geräte bildet, dann wird auf Basis der Gerätetypen der Manager bestimmt. Es wird dabei dasjenige Gerät 31 bis 34 gewählt, welches die größte Entfernung zu einer (hier nicht gezeigten) Steuerung hat. Auf diese Weise wird garantiert, dass bei einem Ring die geblockte Verbindung möglichst weit entfernt von essentiellen Geräten ist. Als essentielles Gerät wird eine Steuereinheit einer Maschine verstanden. Das Vorgehen stellt sicher, dass die Latenz zwischen der Steuereinheit, z.B. einer Speicherprogrammierbaren Steuerung, SPS, und Daten sammelnden Geräten gering ist. Damit hat die Steuerung im normalen Zustand des Ringes die kürzeste Verbindung zu sämtlichen Geräten 31 bis 34 des Ringes. In diesem Beispiel wäre die Steuerung das Gerät 34. Sollte eines der Geräte 31 bis 34 im Ring nur die Option als Manager haben, wird entsprechend keines der anderen Geräte als Manager bestimmt.

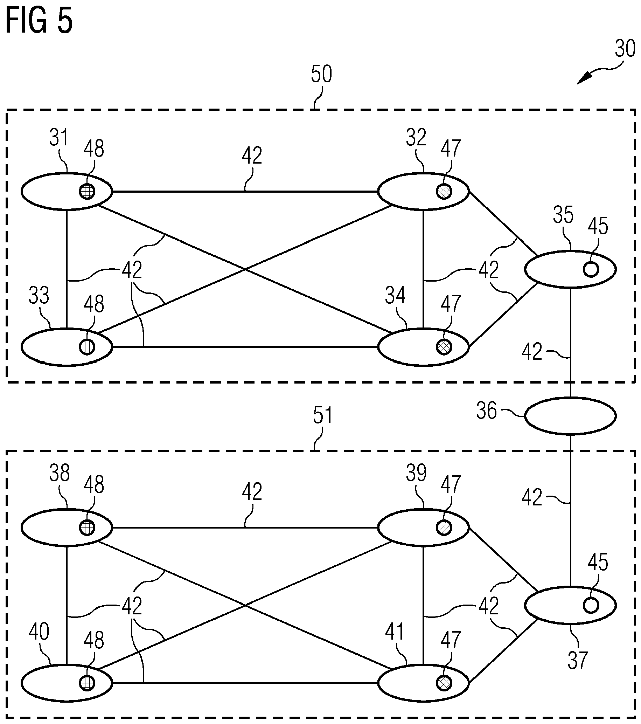

Fig. 5 zeigt eine schematische Darstellung eines Kommunikationsnetzwerks, dass mit dem erfindungsgemäßen Verfahren konfiguriert wird, wobei das Kommunikationsnetzwerk auf dem Netzwerkprotokoll PTP (Precision Time Protocol) basiert. Bei PTP wird ein Kommunikationsstrom für VLAN (Virtual Local Area Network) benötigt. Dafür wird entsprechend ein freies VLAN verwendet, wobei dieses für die Weiterleitung von PTP-Frames verwendet wird. Für die Konfiguration der Geräte, hier 41 bis 31, werden entsprechende Konfigurationstags 45, 47 und 48 verwendet. Die Konfigurationstags 45 repräsentieren sogenannte "Grand-Master-Clocks". Das Bezugszeichen 47 repräsentiert "Transparent-Clocks". Das Bezugszeichen 48 repräsentiert "Ordinary-Clocks".

Das in Fig. 5 gezeigte Kommunikationsnetzwerk 30 setzt sich aus zwei Konfigurationsdomänen 50, 51 zusammen, welche jeweils identisch aufgebaut sind. Der Konfigurationsdomäne 50 sind die Geräte 31, 32, 33, 34 und 35 zugeordnet. Innerhalb der Konfigurationsdomäne 50 sind die Geräte 31 bis 34 jeweils untereinander miteinander verbunden. Das Gerät 35 ist demgegenüber über entsprechende Kommunikationsverbindungen 42 lediglich mit den Geräten 32 und 34 verbunden. Der Konfigurationsdomäne 51 sind die Geräte 38, 39, 40 und 41 zugeordnet. Das Gerät 35 der Konfigurationsdomäne 50 ist über ein Gerät 36 mit dem Gerät 37 der Konfigurationsdomäne 51 über entsprechende Kommunikationsverbindungen 42 verbunden. Innerhalb der Konfigurationsdomäne 51 sind die Geräte 38 bis 41 jeweils untereinander miteinander verbunden. Das Gerät 37 ist demgegenüber über entsprechende Kommunikationsverbindungen 42 lediglich mit den Geräten 39 und 41 verbunden.

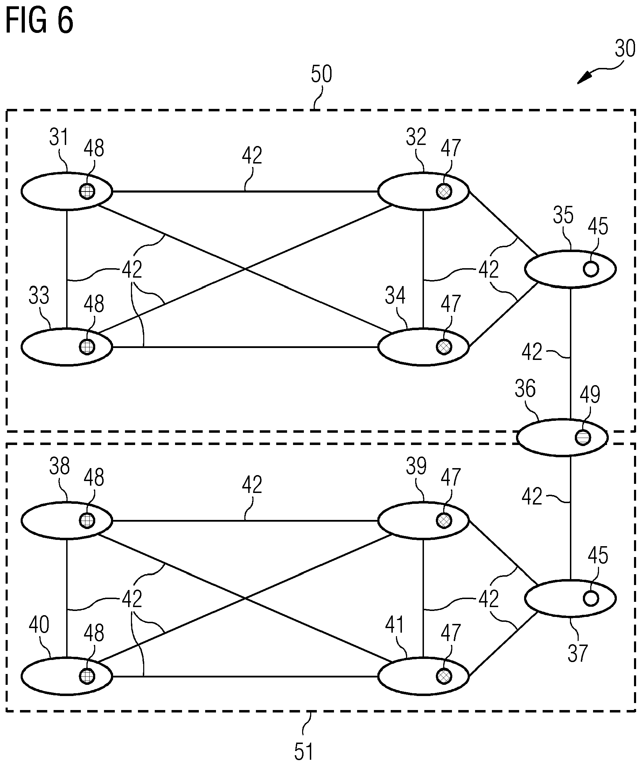

"Boundary-Clock"-Konfigurationstags werden verwendet, wenn eine logische Grenze im Kommunikationsnetzwerk existiert. Dies ist exemplarisch in Fig. 6 dargestellt, dessen Kommunikationsnetzwerk 30 dem Kommunikationsnetzwerk 30 entspricht, mit dem Unterschied, dass das Gerät 36 sowohl der Konfigurationsdomäne 50 als auch der Konfigurationsdomäne 51 angehört. Zudem weist das Gerät 36 das Konfigurationstag "Boundary-Clock" 49 auf. Die Konfigurationstags 47 leiten Pakete nur weiter und verwenden die Uhrzeit. Die Konfigurationstags 47 sind daher nicht in der Lage, eine logische Trennung vorzunehmen. Innerhalb von PTP gibt es die Besonderheit, dass das Konfigurationstag "Boundary-Clock" mit der Konfigurationsdomäne nicht zusammengefasst wird. Die Geräte mit dem Konfigurationstag "Boundary-Clock" (in Fig. 6 das Gerät 36) nehmen entsprechend in mehreren verschiedenen Konfigurationsdomänen teil. Die Konfigurationstags 45, 47 definieren den Gerätemodus in dem PTP-Netzwerk.

Haben Geräte keine Konfigurationstags (wie z.B. das Gerät 36), wird entsprechend deren Geräteeigenschaften eine Rolle ausgewählt. Über die Geräteeigenschaften wird dabei auch der sogenannte Path-Delay-Mechanismus bestimmt. Unterstützen alle Geräte PTP, so wird beispielsweise Peer-to-Peer verwendet. Falls dies nicht möglich ist, wird End-to-End verwendet. Die anderen Konfigurationsparameter werden vom Master abgeleitet. Im vorliegenden Ausführungsbeispiel der Fig. 5 stellen die Geräte 35 und 37 für ihre Konfigurationsdomänen den Master dar. Die Konfiguration für den Master leitet sich dabei von dessen Geräteeigenschaften ab, insbesondere welche Quelle für die Uhrzeit verwendet wird. Die Genauigkeit der Uhrzeit kann beispielsweise von einer Nutzeranforderung abgeleitet werden.

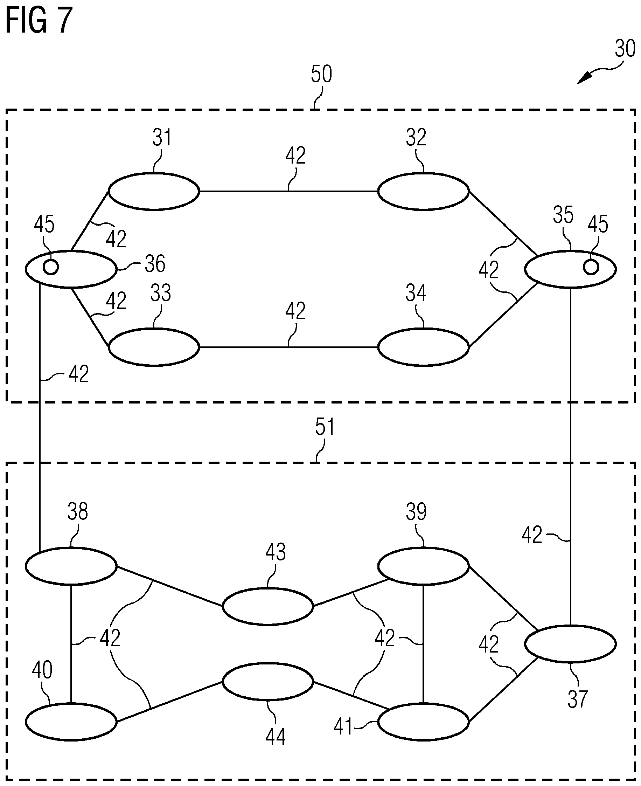

Fig. 7 zeigt eine schematische Darstellung eines mit dem erfindungsgemäßen Verfahren konfigurierten Kommunikationsnetzwerks, welches auf RNA (Redundant Network Architecture) basiert. Das Kommunikationsnetzwerk 30 umfasst insgesamt dreizehn Geräte 31 bis 44, von denen die Geräte 31 bis 36 der Konfigurationsdomäne 50 und die Geräte 37 bis 44 der Konfigurationsdomäne 51 zugeordnet sind. Innerhalb der Konfigurationsdomäne 50 sind die Geräte 31 bis 36 in einer Ringstruktur über Kommunikationsverbindungen 42 miteinander verbunden. Dieser Ring verwendet dabei HSR, was eine stoßfreie Redundanz ermöglicht.. Innerhalb der Konfigurationsdomäne 51 sind die Geräte 38 bis 44 jeweils paarweise untereinander über Kommunikationsverbindungen 42 miteinander verbunden. Diese verwenden das Protokoll PRP, was ebenfalls eine stoßfreie Redundanz ermöglicht. In diesem Fall sind die Endgeräte 43 und 44 mit zwei getrennten PRP-Netzwerken verbunden. Diese getrennten Netzwerke werden als PRP-A, Geräte 38 und 40, und PRP-B, Geräte 37, 39 und 41, bezeichnet. Das Gerät 37 ist über entsprechende Kommunikationsverbindungen 42 lediglich mit den Geräten 39 und 41 verbunden. Die Geräte 43 und 44 sind dabei Endgeräte, welche mit beiden PRP-Netzwerken verbunden.

In diesem Ausführungsbeispiel ist lediglich dem Gerät 35 der Konfigurationsdomäne 50 und dem Gerät 37 der Konfigurationsdomäne 51 ein Konfigurationstag 45 als RNA-Connector zugewiesen.

Zur Konfiguration der Geräte 31 bis 41 des Kommunikationsnetzwerks 30 wird eine Konfigurationsdomäne für die Geräte erzeugt, welche an einem RNA-Netzwerk teilnehmen. Solche Geräte müssen über mindestens zwei Wege zu jedem Zeitpunkt erreicht werden können. Diese Kommunikationsverbindungen müssen für die Geräte unabhängig voneinander sein. Die einzige Ausnahme bilden dabei Geräte, welche über sog. "Redboxen" angekoppelt werden. Netzwerkkomponenten, wie Repeater oder Switches, brauchen nicht doppelt angebunden sein. In der RNA-Konfigurationsdomäne wird somit zunächst geprüft, ob nicht alle Netzwerkkomponenten (sog. Infrastruktur-Geräte) über mindestens zwei Wege erreicht werden können. Ist dies gegeben, muss die entsprechende Technologie für die RNA-Struktur ausgewählt werden.

Hierfür stehen HSR (High-availability Seamless Redundancy) oder PRP (Parallel Redundancy Protocol) zur Verfügung. Teilen sich jeweils einer der zwei Wege immer die gleiche Infrastruktur, wird PRP als untere Konfigurationsdomäne verwendet. Verwenden die beiden Wege auch die gleiche Infrastruktur, wird HSR als obere Konfigurationsdomäne verwendet. Bei PRP wird die vollständige Unabhängigkeit der beiden Wege geprüft. Es dürfen somit nicht Teile des Weges die gleiche Infrastruktur verwenden.

Ferner wird die Kopplung von RNA-Netzwerken an andere Netzwerke sichergestellt. Dafür werden Parameter an die Geräte vergeben, welche Kopplungspunkte darstellen. Dies sind im vorliegenden Ausführungsbeispiel die Geräte 35 und 37 der Konfigurationsdomänen 50, 51. Diese enthalten das Konfigurationstag 45. Hierbei wird geprüft, ob einer oder mehrere RNA-Verbinder das RNA-Netzwerk koppeln. Sind es mehrere, wird dort die entsprechende Konfiguration vorgenommen.

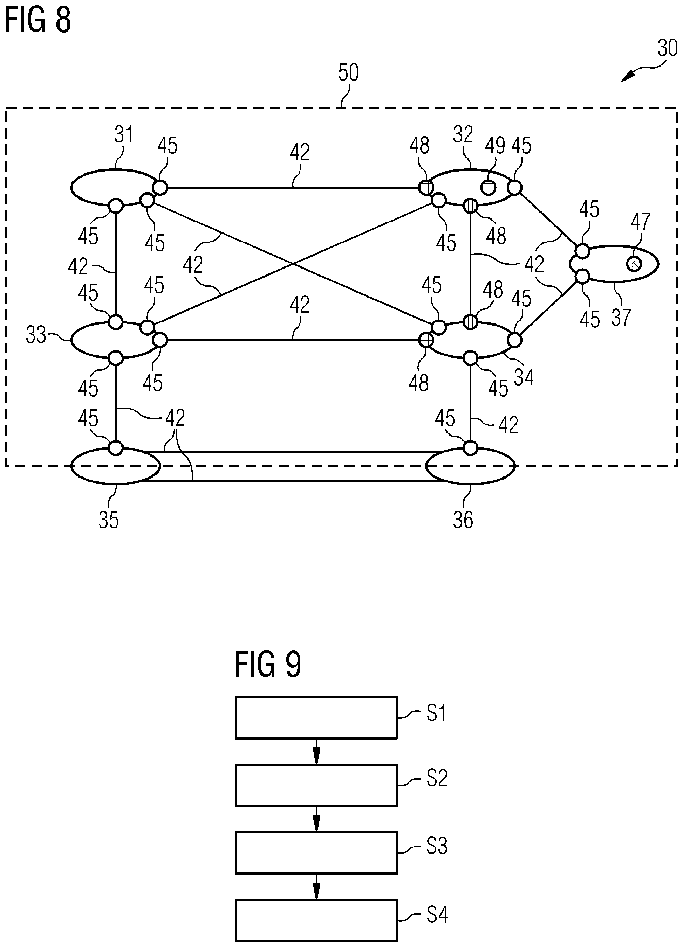

Fig. 8 zeigt eine schematische Darstellung eines weiteren mit dem erfindungsgemäßen Verfahren konfigurierten Kommunikationsnetzwerks, welches auf RSTP (Rapid Spanning Tree Protocol) basiert. Das Kommunikationsnetzwerk 30 umfasst für diesen Fall beispielhaft sieben Geräte 31 bis 37. Die Geräte 31 bis 34 sind jeweils untereinander über Kommunikationsverbindungen 42 miteinander verbunden. Das Gerät 37 ist lediglich mit den Geräten 32 und 34 über jeweilige Kommunikationsverbindungen 42 verbunden. Die Geräte 33 bis 36 bilden jeweils einen weiteren Ring, wobei die Geräte 33 und 34, die Geräte 34 und 36, die Geräte 36 und 35, sowie die Geräte 35 und 33 über eine Kommunikationsverbindung 42 verbunden sind. Eine Besonderheit besteht darin, dass zwischen den Geräten 35 und 36 eine zusätzliche Kommunikationsverbindung 42 vorgesehen ist.

Die Geräte 31 bis 37 sind mit verschiedenen Konfigurationstags 45 bis 48 versehen. Das optionale Konfigurationstag 45 repräsentiert einen RSTP-Port. Das Konfigurationstag 48 repräsentiert einen blockierten RSTP-Port. Das Konfigurationstag 37 repräsentiert eine "Primary-Root-Bridge", das Konfigurationstag 49 repräsentiert eine "Secondary-Root-Bridge".

In der Konfigurationsdomäne 50 sind sämtliche der in dem Kommunikationsnetzwerk 30 gezeigten Geräte 31 bis 37 zusammengefasst. Dies gilt insoweit, als diese in der Lage sind, RSTP als ein "Mesh-Netzwerk" zu bilden. In dem in Fig. 8 gezeigten Ausführungsbeispiel werden die Geräte 35 und 36 nur mit den Ports aufgenommen, welche mit anderen Geräten der Konfigurationsdomäne 50 verbunden sind. Dies erfolgt deshalb, da der zwischen den Geräten 33 bis 36 gebildete Ring mit dem Protokoll MRP gebildet wird. Eine Kopplung zwischen den beiden Redundanzmechanismen wird dabei entsprechend konfiguriert.

Die Konfigurationstags geben an, welche Ports geblockt, und welche Geräte die Funktion einer "Root-Bridge" aufweisen sollen. Auf diese Weise können automatisch Pfadkosten für das RSTP-Netzwerk konfiguriert werden. Dies ermöglicht es den Geräten 31 bis 37 in der Konfigurationsdomäne 50 ein stabiles Netzwerk zu bilden. Kommt es zu Umschaltungen oder einem statischen Betrieb, kann die resultierende Topologie bestimmt werden.

Für geblockte Ports wird entsprechend ein höherer Kostenwert der Verbindung angegeben und für die Root-Bridge eine entsprechend hohe Priorität vergeben. Werden in der Konfigurationsdomäne 50 mehrere Root-Bridges auf einem gleichen Level vergeben, so wird der Konflikt aufgelöst. Für jedes Gerät mit dem Konfigurationstag 47, 48 der Knoten 32, 34 und 37 wird die sog. Zentralität berechnet. Das Gerät mit der höchsten Zentralität erhält das Konfigurationstag 47 und die anderen Geräte die Konfigurationstags 48 (Secondary-Root-Bridge). Sind keine Konfigurationstags vergeben, wird ein Ranking entsprechend über die Zentralität berechnet.

Fig. 9 illustriert einen schematischen Ablaufplan, der die Schritte des erfindungsgemäßen Verfahrens visualisiert. In Schritt S1 werden Geräteeigenschaften sowie Kommunikationsverbindungen zu anderen Geräten des Kommunikationsnetzwerks für ein jeweiliges Gerät bestimmt. In Schritt S2 erfolgt ein Verarbeiten der Geräteeigenschaften und der Kommunikationsverbindungen, um eine Zugehörigkeit zu einer oder mehreren Konfigurationsdomänen zu bestimmen und jedes Gerät des Kommunikationsnetzwerks zumindest einer der bestimmten Konfigurationsdomänen zuzuordnen. Jede Konfigurationsdomäne repräsentiert dabei eine logische Gruppierung von Geräten, die ein vorgegebenes Kommunikationsprotokoll, z.B. RSTP, RNA, PTP oder MRP, nutzt. Zusätzlich werden gerätespezifische Konfigurationstags durch Analyse der Geräteeigenschaften eines jeweiligen Geräts bestimmt. Die Konfigurationstags umfassen eine Information darüber, welche Rolle ein Gerät in der betreffenden Konfigurationsdomäne einnehmen soll oder wird. Die Konfigurationstags geben somit an, wie die Geräte konfiguriert werden sollen. Dadurch wird es ermöglicht, die Konfigurationseinstellungen reproduzierbar zu bestimmen, ohne dass ein Eingreifen eines Benutzers benötigt wird. In Schritt S3 erfolgt eine Instanziierung sämtlicher Konfigurationsdomänen durch eine Zuweisung der Geräte zu einer jeweiligen Konfigurationsdomäne. In Schritt S4 erfolgt dann die automatisierte Konfiguration der einer jeweiligen Konfigurationsdomäne zugewiesenen Geräte gemäß einem für die Konfigurationsdomäne vorbestimmten Protokoll.

*Unabhängig vom grammatikalischen Geschlecht eines bestimmten Begriffes sind Personen mit männlicher, weiblicher oder anderer Geschlechteridentität mit umfasst.*

## Patentansprüche

1. Verfahren zur computerimplementierten Konfiguration von Geräten in einem Kommunikationsnetzwerk (30), das eine Mehrzahl an Geräten (31-41) umfasst, die in vorgegebener Weise miteinander vernetzt sind, wobei jedes Gerät (31-41) mit individuellen Konfigurationsparametern zu konfigurieren ist, mit den Schritten:
a) Bestimmen von Geräteeigenschaften sowie von Kommunikationsverbindungen (42) zu anderen Geräten (31-41) des Kommunikationsnetzwerks (30) für ein jeweiliges Gerät (31-41);
b) Verarbeiten der Geräteeigenschaften und der Kommunikationsverbindungen (42), um eine Zugehörigkeit zu einer oder mehreren Konfigurationsdomänen (50, 51), die eine logische Gruppierung von Geräten (31-41), die ein vorgegebenes Kommunikationsprotokoll verwenden, repräsentieren, zu bestimmen und jedes Gerät (31-41) des Kommunikationsnetzwerks (30) zumindest einer Konfigurationsdomäne (50, 51) zuzuordnen,
c) Instanziierung sämtlicher Konfigurationsdomänen (50, 51) durch Zuweisung der Geräte (31-41) zu einer jeweiligen Konfigurationsdomäne (50,51);
d) automatisierte Konfiguration der einer jeweiligen Konfigurationsdomäne (50, 51) zugewiesenen Geräte (31-41) gemäß einem für die Konfigurationsdomäne vorbestimmten Protokoll.

2. Verfahren nach Anspruch 1, bei dem Schritt d) iterativ für jede in dem Kommunikationsnetzwerk (30) bestimmte Konfigurationsdomäne (50, 51) wiederholt wird.

3. Verfahren nach Anspruch 1 oder 2, bei dem das Bestimmen von Geräteeigenschaften sowie von Kommunikationsverbindungen (42) zu anderen Geräten (31-41) des Kommunikationsnetzwerks (30) iterativ für jedes der Geräte (31-41) in dem Kommunikationsnetzwerk (30) durchgeführt wird.

4. Verfahren nach einem der vorhergehenden Ansprüche, bei dem gerätespezifische Konfigurationstags (45-48) durch Analyse der Geräteeigenschaften eines jeweiligen Geräts (31-41) bestimmt werden.

5. Verfahren nach Anspruch 4, bei dem die Konfigurationstags (45-48) eine Information darüber umfassen, welche Rolle ein Gerät (31-41) in der Konfigurationsdomäne einnehmen soll oder wird.

6. Verfahren nach Anspruch 4 oder 5, bei dem die Analyse der Geräteeigenschaften für jedes Gerät (31-41) in dem Kommunikationsnetzwerk (30) durchgeführt wird.

7. Verfahren nach Anspruch 5 und 6, bei dem zumindest einer Teilauswahl an Geräten (31-41) in einer Konfigurationsdomäne (50, 51) ein Konfigurationstag (45-48) zugewiesen wird.

8. Verfahren nach einem der vorhergehenden Ansprüche, bei dem die Geräteeigenschaften eine oder mehrere der folgenden Informationen umfassen: verfügbare Porttypen; Portanzahl; Geschwindigkeit; auf dem betreffenden Gerät gespeicherte Einstellungen; auf dem betreffenden Gerät konfigurierbare Einstellungen.

9. Verfahren nach einem der vorhergehenden Ansprüche, bei dem als Netzwerkprotokoll RSTP, PTP, NTP, MRP, HSR, PRP verwendet wird.

10. Computerprogrammprodukt, umfassend Befehle, die bei der Ausführung des Programms durch einen Computer diesen veranlassen, das Verfahren gemäß einem der Ansprüche 1 bis 9 auszuführen.

11. Vorrichtung (100) zur computerimplementierten Konfiguration von Geräten (31-41) in einem Kommunikationsnetzwerk (30), das eine Mehrzahl an Geräten (31-41) umfasst, die in vorgegebener Weise miteinander vernetzt sind, wobei jedes Gerät (31-41) mit individuellen Konfigurationsparametern zu konfigurieren ist, wobei die Vorrichtung (100) eine Recheneinheit (101) umfasst, die dazu eingerichtet, die folgenden Schritte durchzuführen:
a) Bestimmen von Geräteeigenschaften sowie von Kommunikationsverbindungen (42) zu anderen Geräten (31-41) des Kommunikationsnetzwerks (30) für ein jeweiliges Gerät (31-41);
b) Verarbeiten der Geräteeigenschaften und der Kommunikationsverbindungen (42), um eine Zugehörigkeit zu einer oder mehreren Konfigurationsdomänen (50, 51), die eine logische Gruppierung von Geräten (31-41), die ein vorgegebenes Kommunikationsprotokoll verwenden, repräsentieren, zu bestimmen und jedes Gerät (31-41) des Kommunikationsnetzwerks (30) zumindest einer Konfigurationsdomäne (50, 51) zuzuordnen;
c) Instanziierung sämtlicher Konfigurationsdomänen (50, 51) durch Zuweisung der Geräte (31-41) zu einer jeweiligen Konfigurationsdomäne (50,51);
d) automatisierte Konfiguration der einer jeweiligen Konfigurationsdomäne (50, 51) zugewiesenen Geräte (31-41) gemäß einem für die Konfigurationsdomäne vorbestimmten Protokoll.

12. Vorrichtung nach Anspruch 11, wobei die Vorrichtung (100) so konfiguriert ist, dass sie ein Verfahren nach einem der Ansprüche 2 bis 9 durchführt.
